# EUROPEAN PATENT APPLICATION

(11) **EP 4 339 330 A2**
(43) Date of publication of application: **20.03.2024**
(21) Application number: 23155999.8
(22) Date of filing: 10.02.2023
(51) Int. Cl.: C25B 1/04, C25B 1/23, C25B 1/27, C25B 3/03, C25B 3/26, C25B 9/05, C25B 9/19, C25B 15/021, C25B 15/023, C25B 15/08

(54) **ELECTROLYSIS DEVICE AND METHOD OF CONTROLLING ELECTROLYSIS DEVICE**

(30) Priority: 15.09.2022 JP 2022147364
(71) Applicant: KABUSHIKI KAISHA TOSHIBA, Minato-ku Tokyo 105-0023 (JP)
(72) Inventor: KIYOTA, Yasuhiro, Tokyo, 105-0023 (JP); ONO, Akihiko, Tokyo, 105-0023 (JP); MIKOSHIBA, Satoshi, Tokyo, 105-0023 (JP); KITAGAWA, Ryota, Tokyo, 105-0023 (JP)
(74) Representative: Hoffmann Eitle

(57) **Abstract**

An electrolysis device includes: an electrolysis cell having a cathode flow path, an anode flow path, a cathode, an anode, and a diaphragm; an anode supply flow path; an anode discharge flow path; a cathode supply flow path; a cathode discharge flow path through which a cathode fluid flows; first to third pressure detectors; first and second pressure controllers that control pressures of the cathode and anode flow paths; a first gas/liquid separator that separates a reduction product from the cathode fluid; a gas detector that measures a concentration of the separated reduction product; and an arithmetic device that calculates pressure values of the anode and cathode flow paths based on the measured concentration and pressures, and controls the pressure controllers to adjust the pressures of the anode and cathode flow paths to the calculated pressure values.

## Description

### FIELD

Arrangements relate to an electrolysis device and a method of controlling an electrolysis device.

### BACKGROUND

In recent years, various kinds of electrolysis technology such as carbon dioxide electrolysis technology and ammonia synthesis electrolysis technology have been drawing attention as decarbonization attempts. The carbon dioxide electrolysis technology includes electrochemically reducing carbon dioxide (CO₂) to convert it to a chemical substance (chemical energy) such as carbon monoxide (CO), formic acid (HCOOH), methanol (CH₃OH), methane (CH₄), ethanol (C₂H₅OH), ethane (C₂H₆), or ethylene (C₂H₄). The ammonia synthesis electrolysis technology includes performing an electrochemical reaction using nitrogen of a raw material to synthesize ammonia. An electrolysis cell having two chambers separated by a diaphragm, may decrease electrolysis efficiency of an electrolysis device, the decrease of electrolysis efficiency is caused by partly moving a cathode gas containing a product from a cathode flow path to an anode flow path, and reoxidizing it on an anode or moving it with an electrolysis solution to discharge from the anode flow path, resulting in a decrease of a recovery ratio of the produced gas.

### RELEVANT REFERENCES

### Patent Reference

Reference 1: JPA 2022-23 047
Reference 2: JPA2019-56135
Reference 3: JPA2021-46574
Reference 4: JPA 58-94767

### BRIEF DESCRIPTION OF THE DRAWINGS

FIG. 1 is a block diagram illustrating a configuration example of an electrolysis device of a first arrangement.
FIG. 2 is a schematic view illustrating a configuration example of an electrolysis cell 101 of the first arrangement.
FIG. 3 is a chart illustrating a required pressure range of the pressure of surfaces of a diaphragm 113.
FIG. 4 is a schematic view illustrating a configuration example of an electrolysis cell 101 in a second arrangement.
FIG. 5 is a schematic view illustrating another configuration example of the electrolysis cell 101 in the second arrangement.
FIG. 6 is a block diagram illustrating a configuration example of an electrolysis device of an example.
FIG. 7 is a chart illustrating a change in total Faraday efficiency over time.
FIG. 8 is a chart illustrating a change over time in a reduction product flow rate measured at an outlet of a cathode flow path 111.
FIG. 9 is a chart illustrating a change over time in a pressure difference between an inlet and the outlet of the cathode flow path 111.

### DETAILED DESCRIPTION

An electrolysis device of an embodiment includes: an electrolysis cell having a cathode flow path through which a first cathode fluid containing a first substance flows, an anode flow path through which a first anode fluid containing a second substance flows, a cathode facing on the cathode flow path and configured to reduce the first substance to produce a reduction product, an anode facing on the anode flow path and configured to oxidize the second substance to produce an oxidation product, and a diaphragm between the cathode and anode flow paths; an anode supply flow path that is connected to an inlet of the anode flow path and through which an anolyte containing the second substance flows; an anode discharge flow path that is connected to an outlet of the anode flow path and through which a second anode fluid containing the oxidation product flows; a cathode supply flow path that is connected to an inlet of the cathode flow path and through which a cathode gas containing the first substance flows; a cathode discharge flow path that is connected to an outlet of the cathode flow path and through which a second cathode fluid containing the reduction product flows; a first pressure detector configured to measure a pressure of the cathode supply flow path; a second pressure detector configured to measure a pressure of the cathode discharge flow path; a third pressure detector configured to measure a pressure of the anode supply flow path; a first pressure controller configured to control a pressure of the cathode flow path; a second pressure controller configured to control a pressure of the anode flow path; a first gas/liquid separator configured to separate the reduction product from the second cathode fluid; a gas detector configured to measure a concentration of the separated reduction product; and an arithmetic device configured to perform arithmetic processing of calculating a pressure value of the anode flow path and a pressure value of the pressure of the cathode flow path based on the measured concentration, the measured pressure of the cathode supply flow path, the measured pressure of the cathode discharge flow path, and the measured pressure of the anode supply flow path, and control the first pressure controller and the second pressure controller to adjust the pressure of the anode flow path and the pressure of the cathode flow path to the pressure values calculated by the arithmetic processing.

Electrolysis devices of arrangements will be hereinafter described with reference to the drawings. In the arrangements, substantially the same constituent parts are denoted by the same reference signs and a description thereof may be partly omitted. The drawings are schematic, and the relation of the thickness and planar dimension of each part, a thickness ratio among the parts, and so on may be different from actual ones.

In this specification, "connecting" not only include "directly connecting" but also may include "indirectly connecting" unless specified.

### (First Arrangement)

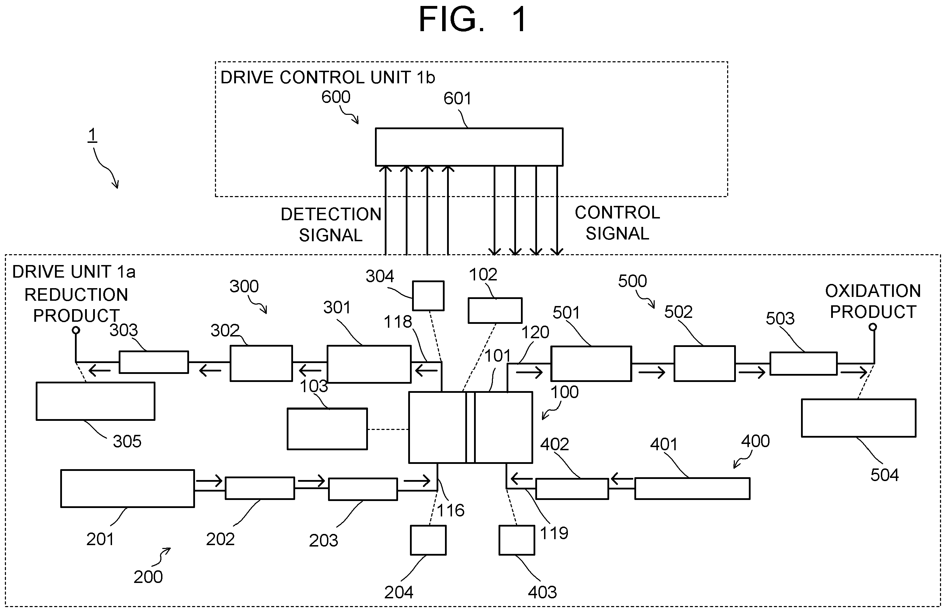

FIG. 1 is a block diagram illustrating a configuration example of an electrolysis device of a first arrangement. The electrolysis device 1 illustrated in FIG. 1 includes a drive unit 1a and a drive control unit 1b.

The drive unit 1a has an electrolysis part 100, a cathode supply part 200, a cathode discharge part 300, an anode supply part 400, and an anode discharge part 500.

The electrolysis part 100 has an electrolysis cell 101, a temperature controller 103, and a power source 102.

The cathode supply part 200 has a cathode gas supply source 201, a flow rate controller 202, a humidifier 203, and a pressure detector 204.

The cathode discharge part 300 has a pressure controller 301, a gas/liquid separator 302, a flow rate detector 303, a pressure detector 304, and a gas detector 305.

The anode supply part 400 has an anolyte supply source 401, a flow rate controller 402, and a pressure detector 403.

The anode discharge part 500 has a pressure controller 501, a gas/liquid separator 502, a flow rate detector 503, and a gas detector 504.

The drive control unit 1b has a control part 600. The control part 600 controls the driving of the constituent elements of the drive unit 1a. The control part 600 has an arithmetic device 601, for instance.

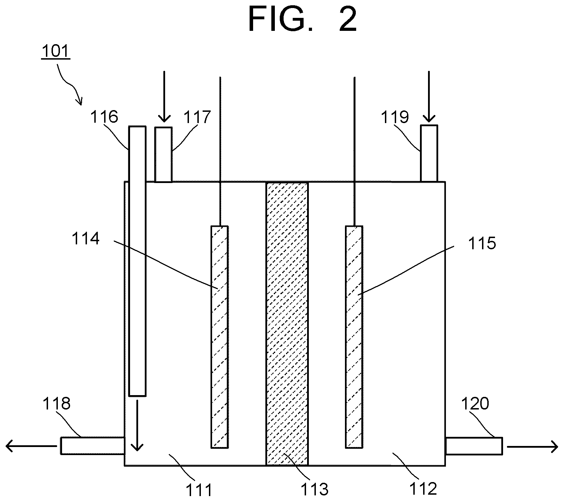

FIG. 2 is a schematic view illustrating a configuration example of the electrolysis cell 101 in the first arrangement. The electrolysis cell 101 illustrated in FIG. 2 has a cathode flow path 111, an anode flow path 112, a diaphragm 113, a cathode 114, an anode 115, a cathode supply flow path 116, a cathode supply flow path 117, a cathode discharge flow path 118, an anode supply flow path 119, and an anode discharge flow path 120. The flow paths each may be connected to a pump as required.

In the cathode flow path 111, a first cathode fluid containing a substance to be reduced flows. The cathode flow path 111 is formed in a first storage part capable of storing the substance to be reduced, for instance. In the cathode flow path 111, the substance to be reduced is stored as a first electrolysis solution containing the substance to be reduced, for instance. The first cathode fluid may contain the first electrolysis solution. The first electrolysis solution functions as a catholyte and contains the substance to be reduced. In the case where carbon dioxide is to be reduced, the catholyte contains carbon dioxide which is the substance to be reduced. In the case where nitrogen is to be reduced, the catholyte contains nitrogen which is the substance to be reduced. The substance to be reduced present in the first electrolysis solution need not be gaseous and may be in a dissolved form or may be in the form of ions such as carbonate ions (CO₃²⁻) or hydrogen carbonate ions (HCO₃⁻). The first electrolysis solution may contain hydrogen ions or hydroxide ions, and it is preferably an aqueous solution.

In the anode flow path 112, a first anode fluid containing a substance to be oxidized flows. The anode flow path 112 is formed in a second storage part capable of storing a second electrolysis solution or water vapor containing the substance to be oxidized, for instance. The second electrolysis solution functions as an anolyte and contains, as the substance to be oxidized, water (H₂O), chloride ions (Cl⁻), carbonate ions (CO₃²⁻), hydrogen carbonate ions (HCO₃⁻), or the like, for instance. The second electrolysis solution may be an alcohol aqueous solution, an aqueous solution of an organic substance such as amine, or the like.

Varying the amounts of water contained in the first electrolysis solution and the second electrolysis solution or changing the electrolysis solution components can change reactivity to change the selectivity of the substance to be reduced or a ratio of produced chemical substances. The first electrolysis solution and the second electrolysis solution may contain a redox couple as required. Examples of the redox couple include Fe³⁺/Fe²⁺ and IO₃⁻/I⁻.

The first storage part and the second storage part are each formed of, for example, a white quartz glass plate, an acrylic resin (PMMA), polystyrene (PS), or the like. The cathode flow path 111 and the anode flow path 112 each may be partly formed of a light-transmitting material and the other part thereof may be formed of a resin material. Examples of the resin material include polyether ether ketone (PEEK), polyamide (PA), polyvinylidene fluoride (PVDF), polyacetal (POM) (copolymer), polyphenylene ether (PPE), an acrylonitrile-butadiene-styrene copolymer (ABS), polypropylene (PP), and polyethylene (PE). The first storage part and the second storage part each may have a space for storing gases contained in a reactant and a product.

The pressures of the first storage part and the second storage part are preferably set to pressures at which the substance to be reduced does not liquefy, and are preferably adjusted to, for example, a range of not lower than 0.1 MPa nor higher than 6.4 MPa. If the pressures in the storage parts are lower than 0.1 MPa, the reduction reaction efficiency of the substance to be reduced may decrease. If the pressures in the storage parts exceed 6.4 MPa, the cathode gas liquefies and the reduction reaction efficiency of the substance to be reduced may decrease. A pressure difference between the first storage part and the second storage part may cause the breakage or the like of the diaphragm 113. Therefore, the difference between the pressures of the first storage part and the second storage part (differential pressure) is preferably 1 MPa or lower.

The lower the temperature of the electrolysis solution, the larger the dissolution amount of the substance to be reduced, but low temperatures result in high solution resistance and a high theoretical voltage of the reaction and thus are disadvantageous from a viewpoint of electrolysis. On the other hand, high temperatures of the electrolysis solution result in a small dissolution amount of carbon dioxide but are advantageous from a viewpoint of electrolysis. Therefore, the operating temperature condition of the electrolysis cell 101 is preferably in a mid-temperature range, for example, in a range of not lower than the atmospheric temperature nor higher than the boiling point of the electrolysis solution. In the case where the electrolysis solution is an aqueous solution, a temperature of not lower than 10°C nor higher than 100°C is preferable and a temperature of not lower than 25°C nor higher than 80°C is more preferable. Note that the operation under higher temperatures is allowed in the case where the cathode gas containing carbon dioxide is supplied to the cathode flow path 111 and water vapor is supplied to the anode flow path 112. In this case, the operating temperature is decided in consideration of the heat resistance of members such as the diaphragm 113. In the case where the diaphragm 113 is an ion exchange membrane or the like, the maximum operating temperature is 180°C, and in the case where the diaphragm 113 is a polymeric porous membrane such as Teflon (registered trademark), the maximum temperature is 300°C.

The first electrolysis solution and the second electrolysis solution may be electrolysis solutions containing different substances or may be the same electronic solutions containing the same substance. In the case where the first electrolysis solution and the second electrolysis solution contain the same substance or the same solvent, the first electrolysis solution and the second electrolysis solution may be regarded as one electrolysis solution. Further, pH of the first electrolysis solution may be higher than pH of the second electrolysis solution. This facilitates the movement of ions such as hydrogen ions or hydroxide ions through the diaphragm 113. This also achieves the effective progress of the redox reaction owing to a liquid junction potential due to the pH difference.

The first electrolysis solution is preferably a solution high in absorptance of the substance to be reduced. The substance to be reduced does not necessarily have to be in a dissolved form in the first electrolysis solution, and the substance to be reduced in a bubble form may be mixed and present in the first electrolysis solution. Examples of the first electrolysis solution in the case where the substance to be reduced contains carbon dioxide include aqueous solutions containing, for example, hydrogen carbonate or carbonate such as lithium hydrogen carbonate (LiHCO₃), sodium hydrogen carbonate (NaHCO₃), potassium hydrogen carbonate (KHCO₃), cesium hydrogen carbonate (CsHCO₃), sodium carbonate (Na₂CO₃), and potassium carbonate (K₂CO₃), phosphoric acid, boric acid, or the like. Examples of the first electrolysis solution in the case where the substance to be reduced contains nitrogen include aqueous solutions containing, for example, potassium sulfate (K₂SO₄), potassium hydrogen sulfate (KHSO₄), or the like. The electrolysis solution containing carbon dioxide may contain any of alcohols such as methanol, ethanol, or acetone or may be an alcohol solution. The first electrolysis solution may be an electrolysis solution containing a carbon dioxide absorbent that lowers the reduction potential of carbon dioxide, has high ion conductivity, and absorbs carbon dioxide.

The second electrolysis solution may be a solution containing water (H₂O), for example, an aqueous solution containing a desired electrolyte. This solution is preferably an aqueous solution that promotes an oxidation reaction of water. Examples of the aqueous solution containing the electrolyte include aqueous solutions containing phosphate ions (PO₄²⁻), borate ions (BO₃³⁻), hydrogen ions (H⁺), sodium ions (Na⁺), potassium ions (K⁺), calcium ions (Ca²⁺), lithium ions (Li⁺), cesium ions (Cs⁺), magnesium ion (Mg²⁺), chloride ions (Cl⁻), hydrogen carbonate ions (HCO₃⁻), carbonate ions (CO₃⁻), hydroxide ions (OH⁻), sulfate ions (SO₄⁻) or the like.

As the aforesaid electrolysis solution, an ionic liquid that is composed of salt of cations such as imidazolium ions or pyridinium ions and anions such as BF₄⁻ or PF₆⁻ and that is in a liquid form in a wide temperature range, or an aqueous solution thereof is usable, for instance. Other examples of the electrolysis solution include solutions of amine such as ethanolamine, imidazole, or pyridine and aqueous solutions thereof. Examples of the amine include primary amine, secondary amine, and tertiary amine. These electrolysis solutions may be high in ion conductivity, have properties of absorbing the substance to be reduced, and have characteristics of decreasing reduction energy.

Examples of the primary amine include methylamine, ethylamine, propylamine, butylamine, pentylamine, and hexylamine. A hydrocarbon of the amine may be replaced by alcohol, halogen, or the like. Examples of the amine whose hydrocarbon is replaced include methanolamine, ethanolamine, and chloromethylamine. Further, an unsaturated bond may be present therein. The same applies to hydrocarbons of the secondary amine and the tertiary amine.

Examples of the secondary amine include dimethylamine, diethylamine, dipropylamine, dibutylamine, dipentylamine, dihexylamine, dimethanolamine, diethanolamine, and dipropanolamine. The replaced hydrocarbons may be different. This also applies to the tertiary amine. Examples of one whose hydrocarbons are different include methylethylamine and methylpropylamine.

Examples of the tertiary amine include trimethylamine, triethylamine, tripropylamine, tributylamine, trihexylamine, trimethanolamine, triethanolamine, tripropanolamine, tributanolamine, triexanolamine, methyldiethylamine, and methyldipropylamine.

Examples of the cations of the ionic liquid include 1-ethyl-3-methylimidazolium ions, 1-methyl-3-propylimidazolium ions, 1-butyl-3-methylimidazolium ions, 1-methyl-3-pentylimidazolium ions, and 1-hexyl-3-methylimidazolium ions.

The second position of the imidazolium ion may be replaced. Examples of the cation resulting from the replacement of the second position of the imidazolium ion include a 1-ethyl-2,3-dimethylimidazolium ion, a 1,2-dimethyl-3-propylimidazolium ion, a 1-butyl-2,3-dimethylimidazolium ion, a 1,2-dimethyl-3-pentylimidazolium ion, and a 1-hexyl-2,3-dimethylimidazolium ion.

Examples of the pyridinium ions include methylpyridinium, ethylpyridinium, propylpyridinium, butylpyridinium, pentylpyridinium, and hexylpyridinium. In the imidazolium ion and the pyridinium ion, an alkyl group may be replaced or an unsaturated bond may be present.

Examples of the anions include fluoride ions (F⁻), chloride ions (Cl⁻), bromide ions (Br), iodide ions (I⁻), BF₄⁻, PF₆⁻, CF₃COO⁻, CF₃SO³⁻, NO₃⁻, SCN⁻, (CF₃SO₂)₃C⁻, bis(trifluoromethoxysulfonyl)imide, and bis(perfluoroethylsulfonyl)imide. The ionic liquid may be composed of dipolar ions formed of the cations and the anions that are connected by hydrocarbons. Note that a buffer solution such as a potassium phosphate solution may be supplied to the cathode flow path 111 and the anode flow path 112.

The diaphragm 113 is provided between the cathode flow path 111 and the anode flow path 112 to separate the cathode flow path 111 and the anode flow path 112. The diaphragm 113 allows ions such as hydrogen ions (H⁺), hydroxide ions (OH⁻), carbonate ions (CO₃²⁻), and hydrogen carbonate ions (HCOs') to move therethrough.

As the diaphragm 113, a membrane selective allowing the flow of anions or cations is used Consequently, the electrolysis solutions in contact with the cathode 114 and the anode 115 respectively can be electrolysis solutions containing different substances and further, it is possible to promote a reduction reaction and an oxidation reaction owing to a difference in ionic strength, a difference in pH, and so on. The use of the diaphragm 113 can separate the first electrolysis solution and the second electrolysis solution from each other. The diaphragm 113 may have a function of transmitting part of the ions contained in the electrolysis solutions in which these electrodes are immersed, that is, a function of shutting off one kind of ions or more contained in the electrolysis solutions. As a result, the two electrolysis solutions can be solutions different in pH, for instance.

Examples usable as the diaphragm 113 include ion exchange membranes such as NEOSEPTA (registered trademark) of ASTOM Corporation, SELEMION (registered trademark) and Aciplex (registered trademark) of AGC Inc., Fumasep (registered trademark) and fumapem (registered trademark) of Fumatech BWT GmbH, Nafion (registered trademark) of DuPont, which is a fluorocarbon resin formed of sulfonated and polymerized tetrafluoroethylene, lewabrane (registered trademark) of LANXESS AG, IONSEP (registered trademark) of IONTECH Inc., Mustang (registered trademark) of PALL Corporation, relax (registered trademark) of MEGA Co., Ltd., and GORE-TEX (registered trademark) of W.L. Gore & Associates GmbH. The ion exchange membrane may be formed using a membrane whose basic structure is hydrocarbons, or in the case of anion exchange, it may be a membrane having an amine group. In the case where the first electrolysis solution and the second electrolysis solution are different in pH, the use of a bipolar membrane in which a cation exchange membrane and an anion exchange membrane are stacked makes it possible to keep pH of the electrolysis solutions stable when they are used.

Other examples usable as the diaphragm 113 other than the ion exchange membrane include: porous membranes of a silicone resin, a fluorine-based resin (perfluoroalkoxyalkane (PFA), a perfluoroethylene-propene copolymer (FEP), polytetrafluoroethylene (PTFE), an ethylene-tetrafluoroethylene copolymer (ETFE), polyvinylidene fluoride (PVDF), polychlorotrifluoroethylene (PCTFE), an ethylenechlorotrifluoroethylene copolymer (ECTFE)), polyethersulfone (PES), or ceramic; and insulating porous bodies such as a glass filter, a filling filled with agar, zeolite, and oxide. In particular, a hydrophilic porous membrane is preferable as the diaphragm 113 because it is not clogged with bubbles.

The cathode 114 faces the cathode flow path 111. The cathode 114 is an electrode (reduction electrode) that reduces the substance to be reduced to produce a reduction product. The cathode114 is disposed in the first storage part to be immersed in the first electrolysis solution. The cathode 114 contains a reduction catalyst for producing the reduction product through the reduction reaction of the substance to be reduced, for example, contains a reduction catalyst for producing ammonia through the reduction reaction of nitrogen. Examples of the reduction catalyst include a material that decreases activation energy for reducing the cathode gas. In other words, a material that lowers overvoltage when the reduction product is produced through the reduction reaction of the cathode gas is one example.

As the cathode 114, a metal material or a carbon material is usable, for instance. As the metal material, metal such as gold, aluminum, copper, silver, platinum, palladium, zinc, mercury, indium, nickel, titanium, or bismuth, or an alloy containing the aforesaid metal is usable, for instance. As the carbon material, graphene, carbon nanotube (CNT), fullerene, ketjen black, or the like is usable, for instance. It should be noted that these are not restrictive. As the reduction catalyst, a metal complex such as a Mo complex, a Ru complex, or a Re complex, a metallocene complex, or an organic molecule having an imidazole skeleton or a pyridine skeleton may be used, for instance. The reduction catalyst may be a mixture of a plurality of materials. The cathode 114 may have a structure in which the reduction catalyst in a thin film form, a lattice form, a granular form, a wire form, or the like is provided on a conductive base material, for instance.

The reduction product produced through the reduction reaction in the cathode 114 differs depending on the kind of the cathode gas, the kind of the reduction catalyst, and so on, and examples thereof in the case where the substance to be reduced contains carbon dioxide include carbon monoxide (CO), formic acid (HCOOH), methane (CH₄), methanol (CH₃OH), ethane (C₂H₆), ethylene (C₂H₄), ethanol (C₂H₅OH), formaldehyde (HCHO), and ethylene glycol (C₂H₆O₂). Examples of the reduction product in the case where the substance to be reduced contains nitrogen include ammonia (NH₃). The cathode 114 sometimes causes a side reaction to produce hydrogen (H₂) simultaneously with the reduction reaction of the aforesaid substance to be reduced.

The anode 115 faces the anode flow path 112. The anode 115 is an electrode (oxidation electrode) that oxidizes the substance to be oxidized such as the substance or ions contained in the second electrolysis solution. For example, it oxidizes water to produce oxygen or a hydrogen peroxide solution or oxidizes chloride ions (Cl⁻) to produce chlorine. The anode 115 is disposed in the second storage part to be immersed in the second electrolysis solution. The anode 115 contains an oxidation catalyst for the substance to be oxidized. As the oxidation catalyst, used is a material that decreases activation energy for the oxidation of the substance to be oxidized, in other words, a material that lowers reaction overpotential.

Examples of the oxidation catalyst include metals such as ruthenium, iridium, platinum, cobalt, nickel, iron, and manganese. Further, binary metal oxide, ternary metal oxide, quaternary metal oxide, or the like is usable. Examples of the binary metal oxide include manganese oxide (Mn-O), iridium oxide (Ir-O), nickel oxide (Ni-O), cobalt oxide (Co-O), iron oxide (Fe-O), tin oxide (Sn-O), indium oxide (In-O), and ruthenium oxide (Ru-O). Examples of the ternary metal oxide include Ni-Fe-O, Ni-Co-O, La-Co-O, Ni-La-O, and Sr-Fe-O. Examples of the quaternary metal oxide include Pb-Ru-Ir-O and La-Sr-Co-O. The oxidation catalyst is not limited to these materials and may be metal hydroxide containing cobalt, nickel, iron, manganese, or the like or a metal complex such as a Ru complex or an Fe complex. A mixture of a plurality of materials may also be used.

The anode 115 may be formed of a composite material containing both the oxidation catalyst and a conductive material. Examples of the conductive material include carbon materials such as carbon black, activated carbon, fullerene, carbon nanotube, graphene, ketjen black, and diamond, transparent conductive oxides such as indium tin oxide (ITO), zinc oxide (ZnO), fluorine-doped tin oxide (FTO), aluminumdoped zinc oxide (AZO), and antimony-doped tin oxide (ATO), metals such as Cu, Al, Ti, Ni, Ag, W, Co, and Au, and an alloy containing at least one of these metals. For example, the anode 115 may have a structure in which the oxidation catalyst in a thin film form, a lattice form, a granular form, a wire form, or the like is provided on a conductive base material. As the conductive base material, a metal material containing titanium, a titanium alloy, or stainless steel is used, for instance.

The cathode supply flow path 116 is connected to an inlet of the cathode flow path 111. In the cathode supply flow path 116, the cathode gas containing the substance to be reduced flows. In the electrolysis cell 101, the cathode gas can be supplied from the cathode supply flow path 116 to the cathode flow path 111. The cathode supply flow path 116 illustrated in FIG. 2 extends in the first storage part, but the position of the cathode supply flow path 116 is not limited to the position illustrated in FIG. 2.

The cathode supply flow path 117 is connected to the inlet of the cathode flow path 111. In the cathode supply flow path 117, the catholyte flows. In the electrolysis cell 101, the catholyte can be supplied to the cathode flow path 111 through the cathode supply flow path 117. The cathode supply flow path 117 may be connected to a notillustrated electrolysis solution supply source. The electrolysis solution supply source is capable of supplying the first electrolysis solution to the cathode flow path 111 through the cathode supply flow path 117. In the case where the first electrolysis solution and the second electrolysis solution are of the same kind, the cathode supply flow path 117 may be connected to the anode supply flow path 119.

The cathode discharge flow path 118 is connected to an outlet of the cathode flow path 111. In the cathode discharge flow path 118, a second cathode fluid discharged from the cathode flow path 111 and containing the reduction product and the first electrolysis solution flows. The electrolysis cell 101 is capable of discharging the second cathode fluid from the cathode flow path 111 through the cathode discharge flow path 118.

The anode supply flow path 119 is connected to an inlet of the anode flow path 112. In the anode supply flow path 119, the anolyte containing the substance to be oxidized flows. In the electrolysis cell 101, the anolyte containing the substance to be oxidized can be supplied to the anode flow path 112 through the anode supply flow path 119.

The anode discharge flow path 120 is connected to an outlet of the anode flow path 112. In the anode discharge flow path 120, a second anode fluid discharged from the anode flow path 112 and containing the oxidation product and the anolyte flows. The electrolysis cell 101 is capable of discharging the second anode fluid from the anode flow path 112 through the anode discharge flow path 120.

The power source 102 applies a voltage across the cathode 114 and the anode 115. Besides a power source of AC power supplied from a power plant, a power source of DC power having passed through a converter circuit, the power source 102 may have a variable power source, that is, a power source that converts renewable energy to electric energy to supply it. Examples of such a power source include a power source that converts kinetic energy or potential energy such as wind power, water power, geothermal energy, or tidal power to electric energy, a power source such as a solar cell having a photoelectric conversion element that converts light energy to electric energy, a power source such as a fuel cell or a storage battery that converts chemical energy to electric energy, and a device that converts vibrational energy such as sound to electric energy. The power source 102 may further have a power controller that controls the aforesaid power source.

The temperature controller 103 has a temperature detector, a heater, and a cooling chiller. These are connected to the electrolysis cell 101. The temperature detector is a contact temperature detector or a radiation temperature detector. The temperature controller 103 may have a chiller in the heater. The heater and the chiller of the temperature controller 103 may be connected to the electrolysis cell 101. The temperature controller 103 has a control mechanism that compares the temperature of the electrolysis cell 101 measured by the temperature detector with a set value to make the temperature of the electrolysis cell 101 approach the set value by heating by the heater or cooling by the chiller. The temperature detector may output a detection signal to the arithmetic device 601 after measuring the temperature of the electrolysis cell 101.

The cathode gas supply source 201 is connected to the inlet of the cathode flow path 111 through the cathode supply flow path 116. The cathode gas supply source 201 supplies the cathode gas containing the substance to be reduced. The cathode gas supply source 201 has, for example, a cylinder cabinet capable of storing the cathode gas.

The flow rate controller 202 is provided at a position that is in the middle of the cathode supply flow path 116 and on a post-stage of the cathode gas supply source 201. The flow rate controller 202 has, for example, a mass flow controller that controls the flow rate of the cathode gas that is to be supplied to the cathode flow path 111 from the cathode gas supply source 201 through the cathode supply flow path 116.

The humidifier 203 is provided at a position that is in the middle of the cathode supply flow path 116 and on a post-stage of the flow rate controller 202. The humidifier 203 is capable of humidifying the cathode gas. The humidifier 203 has, for example, a tank that stores hot water. The humidifier 203 does not necessarily have to be provided.

The pressure detector 204 measures the pressure of the cathode supply flow path 116 to output a detection signal to the arithmetic device 601. On a post-stage of the flow rate controller 202 and the humidifier 203, the pressure detector 204 is connected to the cathode supply flow path 116, for instance.

The pressure controller 301 is provided in the middle of the cathode discharge flow path 118. The pressure controller 301 has a back pressure regulating valve that controls the pressure (primary-side pressure) of the cathode discharge flow path 118 according to a control signal input from the arithmetic device 601, thereby controlling the pressure of the cathode flow path 111.

The gas/liquid separator 302 is provided at a position that is in the middle of the cathode discharge flow path 118 and on a post-stage of the pressure controller 301, for instance. The gas/liquid separator 302 separates the second cathode fluid which is a gas-liquid two-layer flow discharged from the cathode flow path 111 of the electrolysis cell 101, into a cathode waste liquid and a cathode exhaust gas. The cathode exhaust gas contains the reduction product. The gas/liquid separator 302 has a gas/liquid separation membrane, for instance. The cathode waste liquid may be disposed of every predetermined time or may be returned to the anolyte supply source 401 to be reused as the electrolysis solution.

The flow rate detector 303 is capable of measuring the flow rate of the reduction product flowing in the cathode discharge flow path 118.

The pressure detector 304 measures the pressure of the cathode discharge flow path 118 to output a detection signal to the arithmetic device 601. On a post-stage of the flow rate detector 303, the pressure detector 304 is connected to the cathode discharge flow path 118, for instance.

The gas detector 305 measures the concentration of the reduction product flowing in the cathode discharge flow path 118 to output a detection signal to the arithmetic device 601. The gas detector 305 has a gas sensor using gas chromatography, a constant-potential electrolysis gas sensor, a thermal conductivity gas sensor, a gas sensor using a catalyst whose temperature rises according to the reduction product, or a gas sensor using a color reagent, for instance.

The anolyte supply source 401 is connected to the inlet of the anode flow path 112 through the anode supply flow path 119. The anolyte supply source 401 supplies the anolyte containing the substance to be oxidized. The anolyte supply source 401 has a tank capable of storing the anolyte.

The flow rate controller 402 is provided in the middle of the anode supply flow path 119. The flow rate controller 402 has a pump that controls the flow rate of the anolyte that is to be supplied to the anode flow path 112 from the anolyte supply source 401 through the anode supply flow path 119, for instance.

The pressure detector 403 measures the pressure of the anode supply flow path 119 to output a detection signal to the arithmetic device 601. The pressure detector 403 is connected to the anode supply flow path 119 on a post-stage of the flow rate controller 402, for instance.

The pressure controller 501 is provided in the middle of the anode discharge flow path 120. The pressure controller 501 has a back pressure regulating valve that controls the pressure (primary-side pressure) of the anode discharge flow path 120 according to a control signal input from the arithmetic device 601, thereby controlling the pressure of the anode flow path 112.

The gas/liquid separator 502 is provided at a position that is in the middle of the anode discharge flow path 120 and on a post-stage of the pressure controller 501. The gas/liquid separator 502 separates the second anode fluid which is a gas-liquid two-layer flow discharged from the anode flow path 112 of the electrolysis cell 101, into an anode exhaust gas and an anode waste liquid. The anode exhaust gas contains the oxidation product. The anode exhaust gas is sent to the flow rate detector 503. The anode waste liquid may be disposed of every predetermined time or may be returned to the anolyte supply source 401 to be reused as the electrolysis solution. The gas/liquid separator 502 has a gas/liquid separation membrane, for instance.

The flow rate detector 503 measures the flow rate of the anode exhaust gas flowing in the anode discharge flow path 120, to output a detection signal to the arithmetic device 601.

The gas detector 504 is capable of measuring the concentrations of components contained in the anode exhaust gas. The gas detector 504 has a gas sensor using gas chromatography, a constant-potential electrolysis gas sensor, a thermal conductivity gas sensor, or a gas sensor that measures a catalyst temperature rise, or a gas sensor using a color reagent.

The arithmetic device 601 receives the detection signals containing data of measurement values of the pressure detector 204, the pressure detector 304, the gas detector 305, the pressure detector 403, the flow rate detector 503, and the gas detector 504. The arithmetic device 601 performs arithmetic processing using the data of the measurement values of the pressure detector 204, the pressure detector 304, the gas detector 305, the pressure detector 403, the flow rate detector 503, and the gas detector 504, to decide the pressure of the cathode flow path 111, the pressure of the anode flow path 112, and the temperature of the electrolysis cell 101.

Examples of the arithmetic processing that the arithmetic device 601 performs for deciding the pressure of the cathode flow path 111, the pressure of the anode flow path 112, and the temperature of the electrolysis cell 101 include: feedback control-based arithmetic processing of measuring, in advance, how the crossover amount changes according to changes in the pressure of the cathode flow path 111, the pressure of the anode flow path 112, and the temperature of the electrolysis cell 101, and based on this change, deciding the pressure of the cathode flow path 111, the pressure of the anode flow path 112, and the temperature of the electrolysis cell 101 at which the crossover amount is the smallest; arithmetic processing of optimally deciding the pressure of the cathode flow path 111, the pressure of the anode flow path 112, and the temperature of the electrolysis cell 101 based on experience; and optimum value-based arithmetic processing using time-series data, the optimum value-based arithmetic processing including machine learning.

Further, the arithmetic device 601 sends the control signals to the pressure controller 501, the pressure controller 301, and the temperature controller 103 to control the pressure controller 501, the pressure controller 301, and the temperature controller 103, thereby capable of adjusting the pressure of the cathode flow path 111, the pressure of the anode flow path 112, and the temperature of the electrolysis cell 101 to the set values calculated by the arithmetic processing of the arithmetic device 601.

The arithmetic device 601 may be constituted using hardware such as a processor or the like, for instance. Operations may be stored as operation programs in a computer-readable recording medium such as a memory, and the hardware may execute the operations by reading the operation programs stored in the recording medium as required.

A pressure loss due to the cathode flow path 111 can be calculated from a difference between the pressures measured by the pressure detector 204 and the pressure detector 304 (differential pressure), and the pressure of the surfaces of the diaphragm 113 can be calculated from the difference between the pressures measured by the pressure detector 204 and the pressure detector 403 (differential pressure). The pressure loss due to the cathode flow path 111 has a certain value or more according to the sectional area of the cathode flow path 111 and the flow rate of the cathode gas.

Foreign substances such as precipitated salt and metal rust peeled because of corrosion accumulate in the cathode flow path 111 to clog the cathode flow path 111 and decrease the sectional area of the cathode flow path 111 and thus give a larger influence. On the other hand, by decreasing the foreign substances, it is possible to increase the sectional area of the cathode flow path 111, or in the case where the storage part or the diaphragm 113 breaks and the reduction product leaks out from the cathode flow path 111, it is possible to reduce the influence. Therefore, measuring a change in the pressure loss due to the cathode flow path 111 provides an index for predicting a change in the sectional area of the cathode flow path 111 and the leakage of the reduction product without observing the state in the electrolysis cell 101, and accordingly, based on a decrease in the pressure loss due to the cathode flow path 111, it is possible to detect the movement (crossover) of the reduction product.

The pressure of the surfaces of the diaphragm 113, if too large, leads to the breakage of the diaphragm 113 and thus is preferably 1 MPa or lower. The pressure of the surfaces of the diaphragm 113 is decided, for example, based on a bubble point, of the diaphragm 113, which is a pressure at which gas starts permeating therethrough when the gas is spread on one surface of the diaphragm 113 to pressurize the diaphragm 113 or based on its liquid permeation pressure which is a pressure at which water starts permeating therethrough when the water is spread on one surface of the diaphragm 113 to pressurize the diaphragm 113, and is set to a value at which the reduction product does not move from the cathode flow path 111 to the anode flow path 112 through the diaphragm 113 and the second electrolysis solution does not move from the anode flow path 112 to the cathode flow path 111. When the diaphragm 113 deteriorates to change in bubble point and liquid permeation pressure, adjusting the pressure of the surfaces of the diaphragm 113 enables setting the pressure to a condition under which the reduction product and the anolyte do not move through the diaphragm 113. The pressure of the surfaces of the diaphragm 113 is a pressure applied to the surfaces of the diaphragm 113 and is calculated from a diffidence between the pressures measured by the pressure detector 204 and the pressure detector 403.

Whether the flow rate of the reduction product becomes higher or lower than the flow rate of the cathode gas is determined according to the kind of the reduction reaction. For example, in the case of a reaction of reducing carbon dioxide (CO₂) to carbon monoxide (CO) (equation (1)), produced hydroxide ions (OH⁻) and the carbon dioxide of the cathode gas dissolve in the electrolysis solution through the reaction of equation (2) to move to the anode flow path 112, so that the flow rate of the reduction product becomes lower than the flow rate of the cathode gas. On the other hand, in a reaction of reducing nitrogen (N₂) to produce ammonia (NH₃) (equation (3)) and a reaction of reducing water (H₂O) to produce hydrogen (H₂) (equation (4)), the flow rate of the reduction product becomes higher than the flow rate of the cathode gas. In the case where part of the reduction product moves to the anode flow path 112 through the diaphragm 113, the flow rate of the reduction product in the cathode exhaust gas measured by the flow rate detector 303 decreases and the flow rate of the reduction product in the anode exhaust gas measured by the flow rate detector 503 increases. Therefore, if the kind and the amount of the redox reaction do not change, the movement (crossover) of the reduction product can be detected from the value of the flow rate of the reduction product measured by the flow rate detector 303.

COz + H₂O + 2e⁻ → CO + 2OH⁻ ... (1)

CO₂ + OH⁻ → HCO₃⁻ ... (2)

N₂ + 6H⁺ + 6e⁻ → 2NH₃ ... (3)

2H₂O + 2e⁻ → H₂ + 2OH⁻ ... (4)

Also usable is an adjusting mechanism that adjusts the cathode gas concentration in the reduction product to the optimum value by varying the flow rate of the cathode gas that is to be supplied to the cathode flow path 111, according to the concentration of the reduction product measured by the gas detector. 305. This simplifies or eliminates a need for a mechanism and a process for adjusting the concentration of the reduction product in the cathode exhaust gas discharged from the cathode flow path 111, achieving a cost reduction of the whole system. Further, measuring the flow rate and the concentration of the reduction product enables the calculation of the total amount of the reduction product, and comparing the total amount with a theoretical value enables the detection of the movement (crossover) of the reduction product to the outside or to the anode flow path 112. Further, if the reduction product is detected in the anode exhaust gas, it is also possible to similarly detect the crossover.

The following describes a method of decreasing the crossover by detecting the crossover and controlling the pressure of the cathode flow path 111, the pressure of the anode flow path 112, and the temperature of the electrolysis cell 101 (control method of the electrolysis device) in this arrangement.

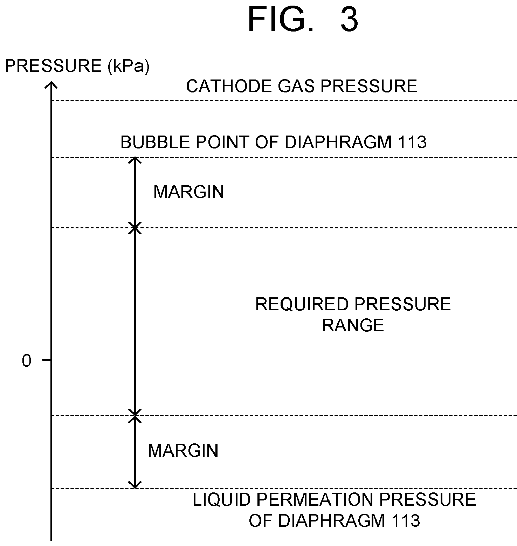

FIG. 3 is a chart illustrating a required pressure range of a difference between the pressures measured by the pressure detector 204 and the pressure detector 403, that is, the pressure of the surfaces of the diaphragm 113, which range is a basis for deciding the pressure to be applied to the electrolysis cell 101. At the operation start time of the electrolysis cell 101, the pressure to be applied to the electrolysis cell 101 is decided according to the bubble point and the liquid permeation pressure of the diaphragm 113, the pressure of the cathode gas that is to be supplied to the electrolysis cell 101 (the pressure of the cathode gas supply source 201), and the pressure of the reduction product that is to be supplied to a storage container or a reduction product refiner that is connected to a post-stage of the flow rate detector 303 and recovers the reduction product, and the pressure controller 301 and the pressure controller 501 control the pressures that are to be measured by the pressure detector 204 and the pressure detector 403. The pressure of the reduction product is the pressure of the cathode discharge flow path 118 and is a pressure measured by the pressure detector 304. Specifically, the pressure measured by the pressure detector 204 needs to be lower than the cathode gas pressure, and the pressure of the surfaces of the diaphragm 113 needs to be lower than the bubble point of the diaphragm 113 and higher than its liquid permeation pressure in order to decrease the crossover. In particular, the value of the pressure measured by the pressure detector 403 varies during operation because of the influences of the pulsation of a liquid feed pump and the gas-liquid two-layer flow originating in the gas produced in the anode flow path 112. Therefore, the required pressure range preferably has a margin of at least about ±50 kPa in the case where the value of the current supplied to the electrolysis cell 101 is about 100 A or less. Since the gas produced by the anode 115 increases according to the current value, the pressure margin is preferably larger as the current value is larger. As such a required pressure range, the pressure of the surfaces of the diaphragm 113 preferably falls within a range of about 300 kPaG to about -50 kPaG in the case where a membrane with small porosity such as an ion exchange membrane is used. In the case where a membrane with large porosity such as a porous diaphragm is used, the pressure of the surfaces of the diaphragm 113 preferably falls within a range of about 200 kPaG to about 50 kPaG. It is sometimes preferable to set the pressure as high as possible within this range in order to increase the reduction product pressure, according to the specification of the supplied gas required on a post-stage of the electrolysis device 1.

In the case where the electrolysis cell 101 is operated for a long period, the diaphragm 113 is crushed or precipitates by melting, or the diaphragm 113 is deteriorated by impurities adhering thereto or a water-repellent/hydrophilic material flowing down, so that its bubble point and liquid permeation pressure change. As a result, in the case where the set pressure is within the margin set based on the bubble point of the diaphragm 113 or in the case where the set pressure is within the margin set based on the liquid permeation pressure of the diaphragm 113, the reduction product or the electrolysis solution moves to/from the cathode flow path 111 from/to the anode flow path 112. An instant at which the bubble point or the liquid permeation pressure changes differs depending on the kind of the diaphragm 113, the operating time, the density of applied current, cell temperature, or the like, and as the operating time is longer, as the applied current density is higher, and as the cell temperature is higher, the diaphragm 113 deteriorates more. For example, in the case where a hydrophilic porous diaphragm is used, the diaphragm 113 may deteriorate after operating for about 1600 hours, under the conditions of a 200 mA/cm² applied current density and an about 60°C cell temperature.

In the case where the crossover is caused by the deterioration of the diaphragm 113, the pressure measured by the pressure detector 204 or the pressure measured by the pressure detector 403 is controlled so that the pressure of the surfaces of the diaphragm 113 falls within the optimum pressure range, whereby the pressure of the cathode flow path 111 and the pressure of the anode flow path 112 are controlled. Examples of a process of deciding the optimum pressures include control in which the total Faraday efficiency (recovery ratio of the reduction product), which is the sum of Faraday efficiencies of all the gases produced in the cathode 111, is measured under varied pressures and the pressures at which the total Faraday efficiency is largest are set as the optimum pressures. This also may be control of maximizing the flow rate value measured by the flow rate detector 303 under varied pressures or may be control of minimizing the pressure loss due to the cathode flow path 111, which is a difference between the pressure measured by the pressure detector 204 and the pressure measured by the pressure detector 403 (differential pressure). The optimization control may be a combination of these.

As described above, the electrolysis device of this arrangement is capable of decreasing the crossover by controlling the pressure of the cathode flow path 111 and the pressure of the anode flow path 112 according to the detected amount of the reduction product. Decreasing the crossover of the reduction product makes it possible to reduce a decrease in electrolysis efficiency.

### (Second Arrangement)

An electrolysis device of a second arrangement is different from the electrolysis device of the first arrangement in the structure of its electrolysis cell 101.

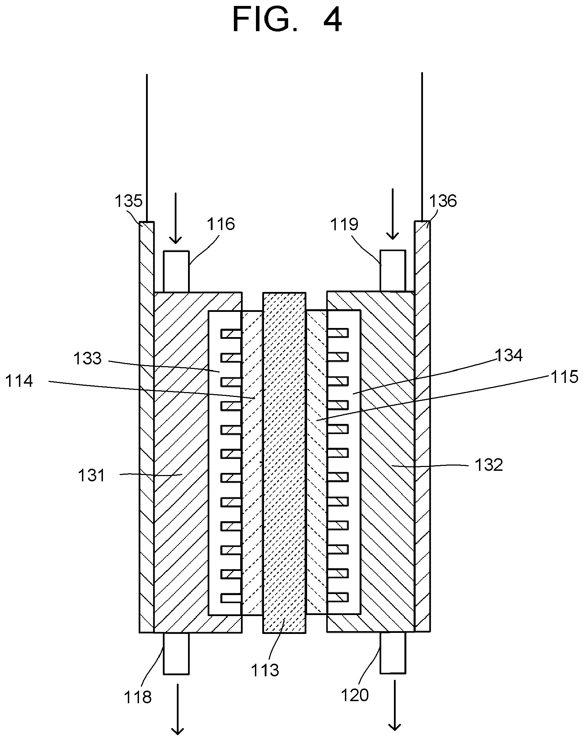

FIG. 4 is a schematic view illustrating a configuration example of the electrolysis cell 101 in the second arrangement. The electrolysis cell 101 illustrated in FIG. 4 has a solid polymer structure, and includes a flow path plate 131, a flow path plate 132, a diaphragm 113, a cathode 114, an anode 115, a cathode supply flow path 116, a cathode discharge flow path 118, an anode supply flow path 119, an anode discharge flow path 120, a current collector 135, and a current collector 136, but does not include the cathode supply flow path 117.

In the flow path plate 131, a cathode flow path 133 including grooves facing the cathode 114 is formed. The cathode flow path 133 is connected to the cathode supply flow path 116 and the cathode discharge flow path 118. For the description of the cathode flow path 133, the description of the cathode flow path 111 can be referred to as required.

In the flow path plate 132, an anode flow path 134 including grooves facing the anode 115 is formed. The anode flow path 134 is connected to the anode supply flow path 119 and the anode discharge flow path 120. For the description of the anode flow path 134, the description of the anode flow path 112 can be referred to as required.

The current collector 135 is electrically connected to the flow path plate 131 and the cathode 114. The current collector 136 is electrically connected to the flow path plate 132 and the anode 115. The current collector 135 and the current collector 136 are connected to the power source 102 through wiring lines. Around the cathode 114 and the anode 115, a gasket equal in thickness to these electrodes are disposed. This enables a decrease in the leakage of gas and liquid to the outside of the electrolysis cell 101.

The flow path plate 131, the flow path plate 132, the diaphragm 113, the cathode 114, and the anode 115 are integrated by a predetermined pressure.

For the other description, which is the same as that of the electrolysis cell 101 of the first arrangement, the description in the first arrangement can be referred to as required.

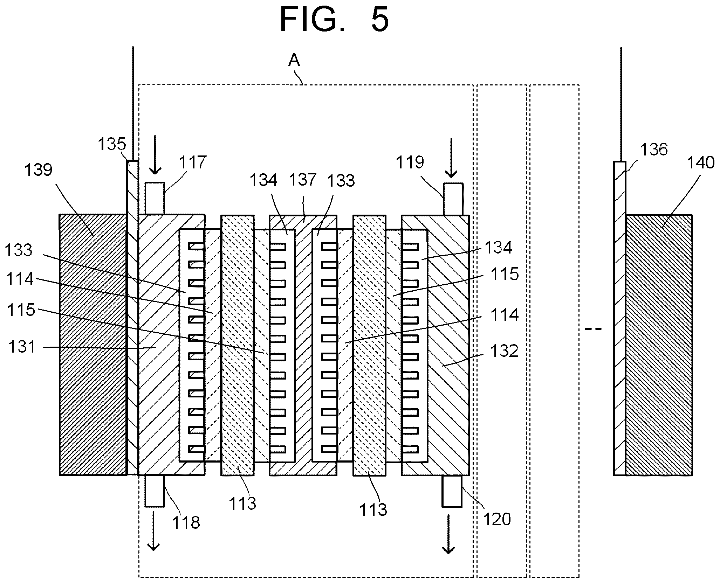

FIG. 5 is a schematic view illustrating another configuration example of the electrolysis cell 101 in the second arrangement. The electrolysis cell 101 illustrated in FIG. 5 includes constituent units A with a stack structure each having in sequence the cathode flow path 133, the cathode 114, the diaphragm 113, the anode 115, the anode flow path 134, the cathode flow path 133, the cathode 114, the diaphragm 113, the anode 115, and the anode flow path 134 of the electrolysis cell 101 illustrated in FIG. 4. For the description of the cathode flow paths 133, the description of the cathode flow path 111 can be referred to as required. For the description of the anode flow paths 134, the description of the anode flow path 112 can be referred to as required. As illustrated in FIG. 5, the constituent units A each may have a flow path plate 137 having the cathode flow path 133 and the anode flow path 134, and a cooling plate that forms a flow path through which cooling water flows may be provided in each gap between the constituent units A. Further, a clamping plate 140 and a clamping plate 141 each may have a flow path through which cooling water flows. The number of the constituent units A is not limited.

In the plurality of constituent units A, the plurality of cathode supply flow paths 116 are connected in parallel, and the same applies to the plurality of anode supply flow paths 119, the plurality of cathode discharge flow paths 118, and the plurality of anode discharge flow paths 120. A connection point (junction) of the cathode supply flow paths 116 is connected to the humidifier 203 and the pressure detector 204. A connection point (junction) of the cathode discharge flow paths 118 is connected to the pressure controller 301 and the pressure detector 304. A connection point (junction) of the anode supply flow paths 119 is connected to the flow rate controller 402 and the pressure detector 403. A connection point (junction) of the anode discharge flow paths 120 is connected to the pressure controller 501. This is not restrictive, and more preferably, the pressure detector 204, the pressure detector 304, the pressure detector 403, the pressure controller 301, and the pressure controller 501 as the connection destinations differ depending on each constituent unit A.

During the operation of the electrolysis cell 101, the supply of the cathode gas is sometimes stopped because the cathode flow path 133 is clogged when a reduction product or component of an anolyte moving to the cathode 114 solidifies to precipitate in the cathode flow path 133. Therefore, in order to reduce the formation of the precipitates, it is preferable to humidify the cathode gas so that the cathode gas contains moisture.

However, too large a moisture content in the cathode gas is not preferable because this results in the supply of a large amount of moisture to the surfaces of catalysts in the cathodes 114 to easily cause the production of hydrogen. Therefore, the moisture content in the cathode gas is preferably not less than 20% nor more than 90% and more preferably not less than 30% nor more than 70% in terms of relative humidity.

The cathode flow paths 133 are supplied with the humidified cathode gas through the cathode supply flow paths 116, and the reduction products by the cathodes 114 are discharged through the cathode discharge flow paths 118. Since the cathode gas containing the substance to be reduced preferably contains a certain amount of moisture as described above, it is preferable to connect the humidifier 203 to the cathode supply flow paths 116 to control the humidity of the supplied gas. The anode flow paths 134 are supplied with an anolyte through the anode supply flow paths 119, and oxidation products by the anodes 115 and the substances to be reduced moving from the cathodes 114 are discharged with the anolytes through the anode discharge flow paths 120.

As in the first arrangement, the electrolysis device of this arrangement is capable of decreasing the crossover by controlling the pressure of the cathode flow paths 133 and the pressure of the anode flow paths 134 according to the detected amount of the reduction products. Decreasing the crossover of the reduction products makes it possible to reduce a decrease in electrolysis efficiency.

It should be noted that this arrangement may be appropriately combined with other arrangements.

### EXAMPLE

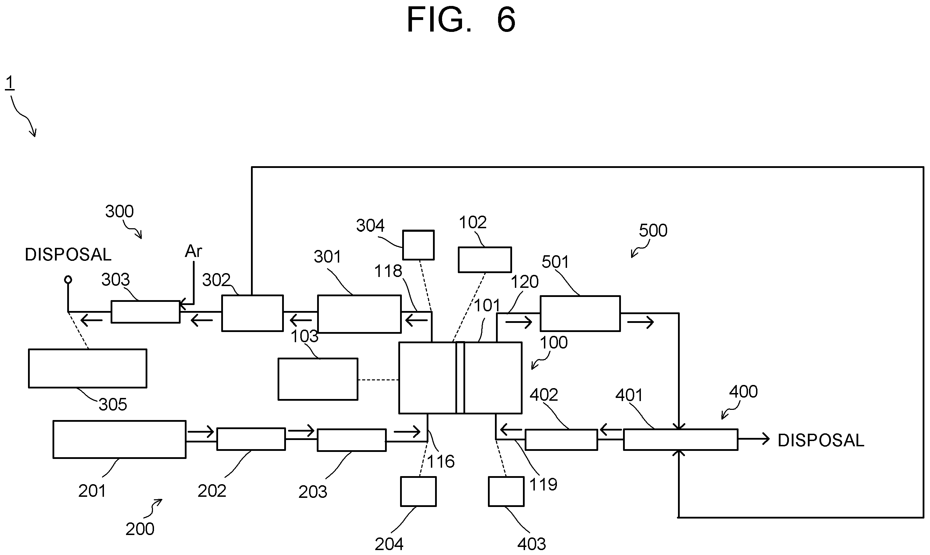

Next, an example and its evaluation results will be described. FIG. 6 is a block diagram illustrating a configuration example of an electrolysis device of the example. The electrolysis device 1 illustrated in FIG. 6 differs from the electrolysis device 1 illustrated in FIG. 1 in that it includes none of the gas/liquid separator 502, the flow rate detector 503, and the arithmetic device 601. As the electrolysis cell 101, used was an electrolysis cell with the configuration illustrated in FIG. 5, having five constituent units A and thus having totally ten cell stacks.

Using the electrolysis device 1 illustrated in FIG. 6, carbon monoxide was produced through the reduction of carbon dioxide of a cathode gas. The flow rate controller 202 has a mass flow controller. The gas detector 305 and the gas detector 504 each have a gas sensor using gas chromatography. The power source 102 has a galvanostat, and a constant current was supplied to the electrolysis cell 101 using the power source 102. The cathodes 114 are each an electrode in which carbon-carrying gold nanoparticles are applied on carbon paper cut into 100 cm square. The anodes 115 are each an electrode in which IrO₂ nanoparticles are applied on a Ti nonwoven fabric cut into 100 cm square. The diaphragms 113 are hydrophilic porous membranes.

The aforesaid electrolysis cell 101 was connected to the cathode supply part 200 and the anode supply part 400 and next operated under the following condition. The flow rate of carbon dioxide with over 99.9% purity that was to be supplied to the cathode flow paths 133 was controlled to 5 SLM by the mass flow controller of the flow rate controller 202, and the carbon dioxide gas humidified by the humidifier 203 such that its dew point became 50°C was supplied to the electrolysis cell 101. Reduction products discharged from the cathode flow paths 133 passed through the pressure controller 301, thereafter joined with a 20 SLM Ar gas on a post-stage of the gas/liquid separator 302 to be diluted, and the resultant was supplied to a gas chromatograph of the gas detector 305. A 5 L 0.1 M KHCO₂ aqueous solution was supplied as an anolyte to the electrolysis solution tank of the anolyte supply source 401, and an electrolysis solution was supplied to the anode flow paths 134 using the liquid feed pump of the flow rate controller 402 at a flow rate of 100 mL/min. A second anode fluid which was a gas-liquid two-layer flow discharged from the anode flow paths 134 passed through the pressure controller 501, and thereafter separated into gas and liquid. An anode waste liquid was returned again to the electrolysis solution tank, and an anode exhaust gas was discharged from a disposal line provided in the electrolysis solution tank. The temperature of the electrolysis cell 101 was controlled to about 60°C, and an initial pressure was set such that the pressure measured by the pressure detector 204 became about 50 kPaG and the pressure measured by the pressure detector 403 became about 0 kPaG. At this time, the pressure measured by the pressure detector 304 was about 48 kPaG, showing that a pressure loss due to the cathode flow paths 133 was about 2 kPaG, and the pressure of the surfaces of the diaphragms 113 was about 50 kPaG. A current with a 20 A current value and a 200 mA/cm² current density was supplied across the cathodes 114 and the anodes 115 of the electrolysis cell 101 using the galvanostat of the power source 102, and components of the reduction products were measured every predetermined time.

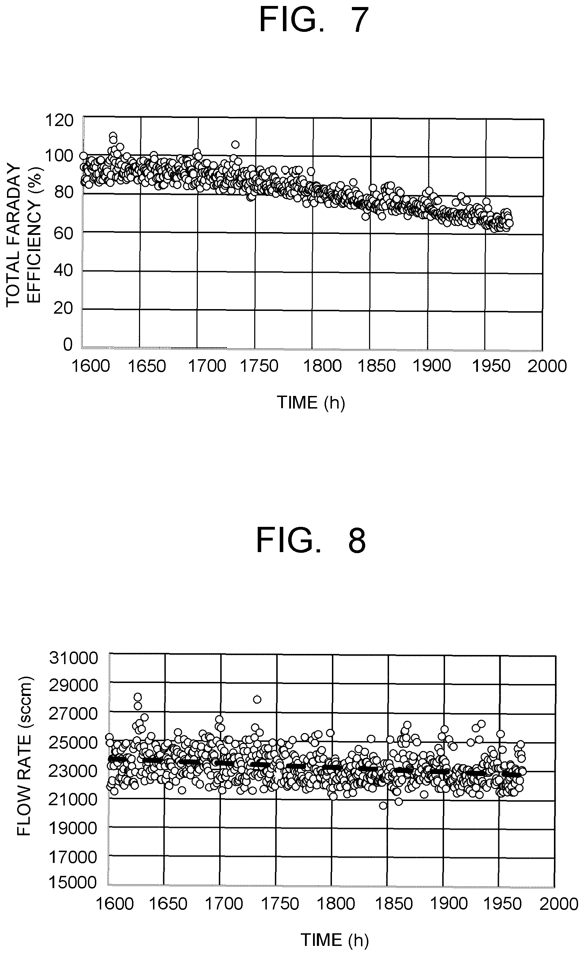

FIG. 7 is a chart illustrating a change over time in the total Faraday efficiency (the sum of CO Faraday efficiency and H₂ Faraday efficiency) during a period from a 1600-hour instant to a 2000-hour instant after the start of the measurement. Even though the electrolysis current flows in the cathode flow paths 133, the total Faraday efficiency decreases with time because the total amount of the reduction products discharged from the cathode flow paths 133 is smaller than the total amount of the reduction products expected from the applied current value. A gas sensor that responds to CO and H₂ is provided outside the electrolysis cell 101, but neither of these was detected, from which it is inferred that the reduction products not detected in the cathode discharge flow paths 118 move to the anode flow paths 134 through the diaphragms 113.

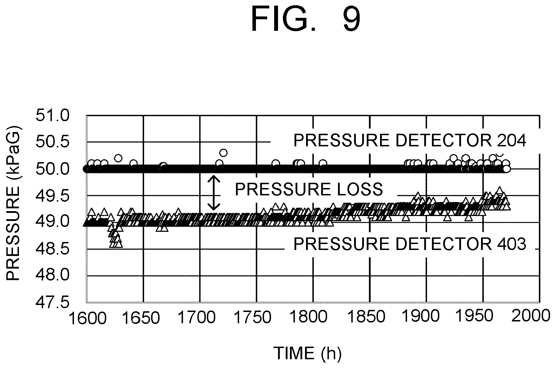

FIG. 8 is a chart illustrating a change over time in the flow rate of the reduction products measured in the cathode discharge flow paths 118. FIG. 9 is a chart illustrating a change over time in a difference between the pressure of the cathode supply flow paths 116 and the pressure of the cathode discharge flow paths 118 (pressure loss due to the cathode flow paths 133). As is seen in FIG. 8 and FIG. 9, the flow rate of the reduction products in the cathode discharge flow paths 118 decreases because the reduction products move to the anode flow paths 134, and the pressure loss due to the cathode flow paths 134 reduces because paths through which the gas escapes to the anode flow paths 134 increase. This shows that not only using the gas detector 305 but also evaluating the change in the flow rate of the reduction products using the flow rate detector 303 and evaluating the change in the pressure loss due to the cathode flow paths 133 using the pressure detector 204, the pressure detector 304, and the pressure detector 403 enables the detection of the crossover.

The above-described arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made without departing from the spirit of the inventions. The accompanying claims and their equivalents are intended to cover such forms or modifications as would fall within the scope and spirit of the inventions.

### (Numbered Clauses relating to the arrangements)

The above-described arrangements can be summarized into the following clauses.
(Clause 1) An electrolysis device comprising:
   an electrolysis cell having
      a cathode flow path through which a first cathode fluid containing a first substance flows,
      an anode flow path through which a first anode fluid containing a second substance flows,
      a cathode facing on the cathode flow path and configured to reduce the first substance to produce a reduction product,
      an anode facing on the anode flow path and configured to oxidize the second substance to produce an oxidation product, and
      a diaphragm between the cathode and anode flow paths;
   an anode supply flow path that is connected to an inlet of the anode flow path and through which an anolyte containing the second substance flows;
   an anode discharge flow path that is connected to an outlet of the anode flow path and through which a second anode fluid containing the oxidation product flows;
   a cathode supply flow path that is connected to an inlet of the cathode flow path and through which a cathode gas containing the first substance flows;
   a cathode discharge flow path that is connected to an outlet of the cathode flow path and through which a second cathode fluid containing the reduction product flows;
   a first pressure detector configured to measure a pressure of the cathode supply flow path;
   a second pressure detector configured to measure a pressure of the cathode discharge flow path;
   a third pressure detector configured to measure a pressure of the anode supply flow path;
   a first pressure controller configured to control a pressure of the cathode flow path;
   a second pressure controller configured to control a pressure of the anode flow path;
   a first gas/liquid separator configured to separate the reduction product from the second cathode fluid;
   a gas detector configured to measure a concentration of the separated reduction product; and
   an arithmetic device configured to perform arithmetic processing of calculating a pressure value of the anode flow path and a pressure value of the cathode flow path based on the measured concentration, the measured pressure of the cathode supply flow path, the measured pressure of the cathode discharge flow path, and the measured pressure of the anode supply flow path, and control the first and second pressure controllers to adjust the pressure of the anode flow path and the pressure of the cathode flow path to the pressure values calculated by the arithmetic processing.
(Clause 2) The electrolysis device according to the clause 1,
   wherein the first substance contains carbon dioxide,
   wherein the second substance contains water,
   wherein the reduction product contains a carbon compound, and
   wherein the oxidation product contains oxygen.
(Clause 3) The electrolysis device according to the clause 1,
   wherein the first substance contains nitrogen,
   wherein the second substance contains water,
   wherein the reduction product contains ammonia, and
   wherein the oxidation product contains oxygen.
(Clause 4) The electrolysis device according to any one of the clause 1 to the clause 3,
   wherein the gas detector has a gas sensor using gas chromatography, a constant-potential electrolysis gas sensor, a thermal conductivity gas sensor, a gas sensor using a catalyst, or a gas sensor using a color reagent.
(Clause 5) The electrolysis device according to any one of the clause 1 to the clause 4, further comprising a flow rate detector configured to measure a flow rate of the separated reduction product.
(Clause 6) The electrolysis device according to any one of the clause 1 to the clause 5,
   wherein the arithmetic device is configured to control the first and second pressure controllers to adjust the pressure of the anode flow path and the pressure of the cathode flow path to the pressure values calculated by the arithmetic processing, resulting in a decrease of an amount of the reduction product moving from the cathode flow path to the anode flow path.
(Clause 7) The electrolysis device according to any one of the clause 1 to the clause 6, further comprising a temperature controller that adjusts a temperature of the electrolysis cell,
   wherein the arithmetic device is configured to calculate a value of the temperature of the electrolysis cell by the arithmetic processing and control the temperature controller to adjust the temperature of the electrolysis cell to the value calculated by the arithmetic processing, resulting in a decrease of the amount of the reduction product moving from the cathode flow path to the anode flow path.
(Clause 8) A method of controlling an electrolysis device, the electrolysis device comprising:
   an electrolysis cell having
      a cathode flow path through which a first cathode fluid containing a first substance flows,
      an anode flow path through which a first anode fluid containing a second substance flows,
      a cathode facing on the cathode flow path and configured to reduce the first substance to produce a reduction product,
      an anode facing on the anode flow path and configured to oxidize the second substance to produce an oxidation product, and
      a diaphragm between the cathode and anode flow paths;
   an anode supply flow path that is connected to an inlet of the anode flow path and through which an anolyte containing the second substance flows;
   an anode discharge flow path that is connected to an outlet of the anode flow path and through which a second anode fluid containing the oxidation product flows;
   a cathode supply flow path that is connected to an inlet of the cathode flow path and through which a cathode gas containing the first substance flows; and
   a cathode discharge flow path that is connected to an outlet of the cathode flow path and through which a second cathode fluid containing the reduction product flows,
   the method comprising:
      a first step of measuring a pressure of the cathode supply flow path, a pressure of the cathode discharge flow path, and a pressure of the anode supply flow path, separating the reduction product from the second cathode fluid, and measuring a concentration of the reduction product,
      a second step of performing arithmetic processing of calculating a pressure value of the anode flow path and a pressure value of the cathode flow path, the arithmetic processing being performed based on the measured concentration, the measured pressure of the cathode supply flow path, the measured pressure of the cathode discharge flow path, and the measured pressure of the anode supply flow path; and
      a third step of adjusting the pressure of the anode flow path and the pressure of the cathode flow path to the pressure values calculated by the arithmetic processing.
(Clause 9) The method according to the clause 8,
   wherein the first substance contains carbon dioxide,
   wherein the second substance contains water,
   wherein the reduction product contains a carbon compound, and
   wherein the oxidation product contains oxygen.
(Clause 10) The method according to the clause 8,
   wherein the first substance contains nitrogen,
   wherein the second substance contains water,
   wherein the reduction product contains ammonia, and
   wherein the oxidation product contains oxygen.
(Clause 11) The method according to any one of the clause 8 to the clause 10,
   wherein the first step includes measuring a flow rate of the reduction product.
(Clause 12) The method according to any one of the clause 8 to the clause 11,
   wherein the third step includes adjusting the pressure of the anode flow path and the pressure of the cathode flow path to the values calculated by the arithmetic processing, resulting in a decrease of an amount of the reduction product moving from the cathode flow path to the anode flow path.
(Clause 13) The method according to any one of the clause 8 to the clause 12,
   wherein the third step includes calculating a value of a temperature of the electrolysis cell by the arithmetic processing, and adjusting the temperature of the electrolysis cell to the value calculated by the arithmetic processing, resulting in a decrease of the amount of the reduction product moving from the cathode flow path to the anode flow path.
(Clause 14) The method according to any one of the clause 8 to the clause 13,
   wherein the arithmetic processing is first arithmetic processing based on feedback control, second arithmetic processing based on experience, or third arithmetic processing based on optimization using time-series data, the optimization including optimization using machine learning.

## Claims

1. An electrolysis device comprising:
an electrolysis cell comprising
a cathode flow path through which a first cathode fluid containing a first substance flows,
an anode flow path through which a first anode fluid containing a second substance flows,
a cathode facing on the cathode flow path and configured to reduce the first substance to produce a reduction product,
an anode facing on the anode flow path and configured to oxidize the second substance to produce an oxidation product, and
a diaphragm between the cathode and anode flow paths;
an anode supply flow path that is connected to an inlet of the anode flow path and through which an anolyte containing the second substance flows;
an anode discharge flow path that is connected to an outlet of the anode flow path and through which a second anode fluid containing the oxidation product flows;
a cathode supply flow path that is connected to an inlet of the cathode flow path and through which a cathode gas containing the first substance flows;
a cathode discharge flow path that is connected to an outlet of the cathode flow path and through which a second cathode fluid containing the reduction product flows;
a first pressure detector configured to measure a pressure of the cathode supply flow path;
a second pressure detector configured to measure a pressure of the cathode discharge flow path;
a third pressure detector configured to measure a pressure of the anode supply flow path;
a first pressure controller configured to control a pressure of the cathode flow path;
a second pressure controller configured to control a pressure of the anode flow path;
a first gas/liquid separator configured to separate the reduction product from the second cathode fluid;
a gas detector configured to measure a concentration of the separated reduction product; and
an arithmetic device configured to perform arithmetic processing of calculating a pressure value of the anode flow path and a pressure value of the cathode flow path based on the measured concentration, the measured pressure of the cathode supply flow path, the measured pressure of the cathode discharge flow path, and the measured pressure of the anode supply flow path, and control the first and second pressure controllers to adjust the pressure of the anode flow path and the pressure of the cathode flow path to the pressure values calculated by the arithmetic processing.

2. The electrolysis device according to claim 1,
wherein the first substance contains carbon dioxide,
wherein the second substance contains water,
wherein the reduction product contains a carbon compound, and
wherein the oxidation product contains oxygen.

3. The electrolysis device according to claim 1,
wherein the first substance contains nitrogen,
wherein the second substance contains water,
wherein the reduction product contains ammonia, and
wherein the oxidation product contains oxygen.

4. The electrolysis device according to any one of claim 1 to claim 3,
wherein the gas detector has a gas sensor using gas chromatography, a constant-potential electrolysis gas sensor, a thermal conductivity gas sensor, a gas sensor using a catalyst, or a gas sensor using a color reagent.

5. The electrolysis device according to any one of claim 1 to claim 4, further comprising a flow rate detector configured to measure a flow rate of the separated reduction product.

6. The electrolysis device according to any one of claim 1 to claim 5,
wherein the arithmetic device is configured to control the first and second pressure controllers to adjust the pressure of the anode flow path and the pressure of the cathode flow path to the pressure values calculated by the arithmetic processing, resulting in a decrease of an amount of the reduction product moving from the cathode flow path to the anode flow path.

7. The electrolysis device according to any one of claim 1 to claim 6, further comprising a temperature controller configured to adjust a temperature of the electrolysis cell,
wherein the arithmetic device is configured to calculate a value of the temperature of the electrolysis cell by the arithmetic processing and control the temperature controller to adjust the temperature of the electrolysis cell to the value calculated by the arithmetic processing, resulting in a decrease of an amount of the reduction product moving from the cathode flow path to the anode flow path.

8. A method of controlling an electrolysis device, the electrolysis device comprising:
an electrolysis cell comprising
a cathode flow path through which a first cathode fluid containing a first substance flows,
an anode flow path through which a first anode fluid containing a second substance flows,
a cathode facing on the cathode flow path and configured to reduce the first substance to produce a reduction product,
an anode facing on the anode flow path and configured to oxidize the second substance to produce an oxidation product, and
a diaphragm between the cathode and anode flow paths;
an anode supply flow path that is connected to an inlet of the anode flow path and through which an anolyte containing the second substance flows;
an anode discharge flow path that is connected to an outlet of the anode flow path and through which a second anode fluid containing the oxidation product flows;
a cathode supply flow path that is connected to an inlet of the cathode flow path and through which a cathode gas containing the first substance flows; and
a cathode discharge flow path that is connected to an outlet of the cathode flow path and through which a second cathode fluid containing the reduction product flows,
the method comprising:
a first step of measuring a pressure of the cathode supply flow path, a pressure of the cathode discharge flow path, and a pressure of the anode supply flow path, separating the reduction product from the second cathode fluid, and measuring a concentration of the separated reduction product,
a second step of performing arithmetic processing of calculating a pressure value of the anode flow path and a pressure value of the cathode flow path, the arithmetic processing being performed based on the measured concentration, the measured pressure of the cathode supply flow path, the measured pressure of the cathode discharge flow path, and the measured pressure of the anode supply flow path; and
a third step of adjusting the pressure of the anode flow path and the pressure of the cathode flow path to the pressure values calculated by the arithmetic processing.

9. The method according to claim 8,
wherein the first substance contains carbon dioxide,
wherein the second substance contains water,
wherein the reduction product contains a carbon compound, and
wherein the oxidation product contains oxygen.

10. The method according to claim 8,
wherein the first substance contains nitrogen,
wherein the second substance contains water,
wherein the reduction product contains ammonia, and
wherein the oxidation product contains oxygen.

11. The method according to any one of claim 8 to claim 10,
wherein the first step includes measuring a flow rate of the reduction product.

12. The method according to any one of claim 8 to claim 11,
wherein the third step includes adjusting the pressure of the anode flow path and the pressure of the cathode flow path to the pressure values calculated by the arithmetic processing, resulting in a decrease of an amount of the reduction product moving from the cathode flow path to the anode flow path.

13. The method according to any one of claim 8 to claim 12,
wherein the third step includes calculating a value of a temperature of the electrolysis cell by the arithmetic processing, and adjusting the temperature of the electrolysis cell to the value calculated by the arithmetic processing, resulting in a decrease of an amount of the reduction product moving from the cathode flow path to the anode flow path.

14. The method according to any one of claim 8 to claim 13,
wherein the arithmetic processing is first arithmetic processing based on feedback control, second arithmetic processing based on experience, or third arithmetic processing based on optimization using time-series data, the optimization including optimization using machine learning.
